# EUROPEAN PATENT SPECIFICATION

(11) **EP 3 398 370 B1**
(45) Date of publication and mention of the grant of the patent: **15.11.2023**
(21) Application number: 16820306.5
(22) Date of filing: 29.12.2016
(51) Int. Cl.: H04W 28/02, H04W 16/16, H04W 36/20, H04W 84/12, H04W 88/10, H04W 36/22, H04J 11/00, H04W 16/32

(54) **MOBILE COMMUNICATION SYSTEM AND METHODS OF TRANSMITTING AND RECEIVING A MESSAGE**
MOBILKOMMUNIKATIONSSYSTEM UND VERFAHREN ZUM SENDEN UND EMPFANGEN VON NACHRICHTEN
SYSTÈME DE COMMUNICATION MOBILE ET PROCÉDÉS D'ÉMISSION ET DE RÉCEPTION D'UN MESSAGE

(30) Priority: 29.12.2015 EP 15202878
(43) Date of publication of application: 07.11.2018
(73) Proprietor: Koninklijke KPN N.V., 3072 AP Rotterdam (NL)
(72) Inventor: CRONIE, Harm, 1040 Echallens (CH); LAWRENSON, Matthew, 1030 Bussigny (CH); NOLAN, Julian, 1009 Pully (CH)
(74) Representative: Wuyts, Koenraad Maria
(86) International application number: PCT/EP2016/082810
(87) International publication number: WO 2017/114884

(56) References cited:
- WO-A1-2013/123644
- US-A1- 2013 088 983
- US-A1- 2014 334 446

## Description

### Field of the invention

The invention relates to a mobile communication system and to a base station, and a controller for use in such a system.

### Background of the invention

The cells of conventional cellular communication networks, which often use GSM, UMTS, CDMA or LTE technology, are becoming denser and denser due to an increasing number of user terminals. Furthermore, the number of non-cellular networks, especially ad hoc networks, and user terminals in those networks is also significantly increasing. This also increases the probability of different networks interfering with each other, not only when they are using the same frequency band, but also when they are using adjacent frequency bands. The problem of different non-cellular, e.g. Wi-Fi (IEEE 802.11) networks, interfering with each other is well known and has been addressed with Dynamic Frequency Selection techniques by vendors of Wi-Fi network equipment. However, this only provides a limited reduction of interference when cellular user terminals are involved, if any at all.

US2014/0307818 discloses systems and methods for configuring base stations in a geographical region to handle specific respective types of data traffics. In one disclosed method, a processor selects a transmit pre-coder matrix, which is applied to symbol streams before multi-carrier modulation, such that a transmit beam pattern of a base station creates a spatial null within or over the entire coverage area of a neighboring base station using a massive MIMO antenna array. A drawback of this method is that it only cancels out interference caused by the base station in a cell and not the interference caused by other devices in the cell.

US 2014/0334446 A1 discloses a method for data offloading in a wireless communication supporting multiple radio access networks, and a device for the same. Specifically, the method comprises: a step in which a neighboring cell report including an identifier for a wireless local area network (WLAN) access point (AP) is received from a first terminal and a second terminal; a step in which, if the first and second terminals are communicating with one another and the WLAN AP identifiers transmitted by the first and second terminals are the same, an offloading indication message, indicating the offloading of first and second terminal data, is transmitted to the WLAN AP having the WLAN AP identifier; and a step in which an offloading command message, ordering the transmission and reception of data via the WLAN AP, is transmitted to the first and second terminals. Preferably, alternatively or additionally, whether or not the data transception through the WLAN AP has been accepted may be decided based upon at least any one of a QoS (Quality of Service) available when data are transceived through the WLAN AP and an amount of power required for transceiving data through the WLAN AP.

WO 2013/123644 A1 relates to an apparatus comprising: at least one processor and at least one memory including a computer program code, the at least one memory and the computer program code configured to, with the at least one processor, cause the apparatus at least to: provide access to a network and needed bearers locally, and obtain offload bearer traffic from an umbrella node under control of the umbrella node in such a manner that a core network sees the offload bearer traffic as internal umbrella node traffic.

US 2013/088983 A1 describes a method and apparatus for integrating third generation partnership project (3GPP) radio access network and an Institute of Electrical and Electronics Engineers (IEEE) 802.11 radio access technologies (RATs). This may be done at a medium access control (MAC) layer or below the MAC layer. For example, a wireless transmit/receive unit (WTRU) for multiple radio access technology (RAT) integration includes a 3GPP RAT including a radio resource control (RRC) entity, an IEEE 802.11 RAT including a medium access control (MAC) management entity, and a session management entity (SME) for mapping between the RRC entity and the MAC management entity. Combined, hybrid and split versions of logical channel prioritization (LCP) are described. The features of an LTE access stratum-service management entity (AS-SME) are also described.

### Summary of the invention

It is a first object of the invention to provide a mobile communication system, which reduces interference caused by cellular user terminals.

The invention is defined by the independent claims. Preferred embodiments of the invention are defined in the dependent claims.

According to the invention, the mobile communication system comprises a base station coupled to a cellular communication network, a cellular user terminal configured to transmit wireless signals to said base station and to receive wireless signals from said base station, a controller configured to control at least one non-cellular network and to receive wireless signals from at least one non-cellular user terminal, and an interference measurement component configured to measure interference caused by said cellular user terminal, wherein said base station is configured to transmit an offload message to at least one of said cellular user terminal and said controller when said interference measured by said interference measurement component exceeds a certain threshold, said offload message comprising at least one of a request for said cellular user terminal to connect to said controller and a request for said controller to connect to said cellular user terminal and comprising at least one of an identifier identifying said non-cellular network, an identifier identifying said controller and an identifier identifying said cellular user terminal.

The non-cellular network may comprise two or more devices. The non-cellular network may use technologies such as Wi-Fi (IEEE 802.11), WiMAX and Bluetooth, but may also use cellular technologies, e.g. LTE Proximity Services (including LTE D2D and LTE Direct) and 5G ad-hoc network, for example. Wi-Fi may be used in infrastructure or ad hoc mode, for example. The non-cellular network may use Wi-Fi Direct, for example. A user terminal may be a smartphone, a tablet, smart glasses, a smart watch or a camera, for example. A user terminal may be a machine-to-machine or Internet of Things (loT) device, for example. A cellular user terminal may be any device comprising a cellular interface. A non-cellular user terminal is a user terminal connected to the non-cellular network. The offload message may be a dedicated message or may be part of another message. The offload message may be included in a packet comprising payload, for example.

By having a base station, which typically covers a larger geographical area, offload, i.e. pass on to another, one or more cellular user terminals close to a non-cellular network, which typically covers a smaller geographical area, e.g. an ad hoc network, to the non-cellular network when the one or more cellular user terminals are determined to cause interference, this interference is reduced. The one or more user terminals may cause interference to other user terminals transmitting wireless signals to said base station, for example. The one or more user terminals may cause interference to terminals of said non-cellular network if the non-cellular network is operating in a channel band adjacent to the one used by the base station (or in the same channel band, but this is less likely), for example.

Said controller comprises at least part of said interference measurement component. The controller may have the best location for determining the interference accurately. Additionally, at least part of said interference measurement component may also be comprised in other user terminals related to the non-cellular network.

Said base station may be configured to transmit an offload message to said cellular user terminal when said interference measured by said interference measurement component exceeds a certain threshold, said offload message comprising at least one of an identifier identifying said non-cellular network and an identifier identifying said controller. Transmitting the offload message to the cellular user terminal is advantageous when the cellular user terminal has own credentials for connecting to the controller, e.g. when the non-cellular network comprises a home network of the cellular user terminal, or any Wi-Fi network configured by the user on the cellular user terminal.

Said base station may be configured to transmit an offload message to said controller when said interference measured by said interference measurement component exceeds a certain threshold, said offload message comprising an identifier identifying said cellular user terminal. Transmitting the offload message to the controller is advantageous when the controller is known to the base station, e.g. when they are operated by the same company or affiliated companies.

Said connection between said cellular user terminal and said controller may replace an existing connection between said cellular user terminal and said base station. When connections are expected to last for a longer period of time, e.g. when they are used for streaming of a movie, a TV program or a song, replacing the existing connection is especially worthwhile.

Said cellular user terminal may be configured to, after said user terminal and said controller have connected, setup any new connection to the Internet via said controller until further notice. When the interference is expected to be present for a longer period of time, this avoids that connections between the base station and the cellular user terminal are setup and then replaced by connections between the cellular user terminal and the controller many times.

Said controller may be configured to relay at least part of information sent by said cellular user terminal to said non-cellular network to at least one of said base station and said cellular communication network. Relaying the information to the base station and/or the cellular communication network is beneficial when the non-cellular network controller has the appropriate transmitter to do this. The base station may transmit credentials to connect to the base station and/or to access the cellular communication network to the controller of the non-cellular network. The credentials may also be transmitted in the offload message.

Said controller may be configured to relay at least part of information sent by said cellular user terminal to said controller to a further non-cellular network coupled to the Internet instead of to said base station. Relaying the information to the further non-cellular network coupled to the Internet is beneficial when the cellular user terminal wants to connect to the Internet and the further non-cellular network provides a faster connection to the Internet, for example. This also provides most benefit in reducing interference between the cellular network and the non-cellular network.

Said base station is configured to relay at least some information intended for said cellular user terminal via said controller. Although the base station can use other techniques to reduce interference, e.g. beamforming, it may require a complicated implementation of higher-level communication protocols to transmit information directly to the cellular user terminal, but receive information from the cellular user terminal via the controller. Relaying this information to the non-cellular network may be a better solution in those cases. It may be possible to relay only a certain type of information, e.g. to relay streaming data traffic, but not SMS messages.

According to an example that does not fall under the scope of the claims, the method of receiving a message comprises the steps of receiving an offload message, said offload message comprising at least one of a request for a cellular user terminal to connect to a controller of a non-cellular network and a request for said controller to connect to said cellular user terminal and at least one of an identifier identifying said non-cellular network, an identifier identifying said controller and an identifier identifying said cellular user terminal, and establishing a connection between said cellular user terminal and said controller.

According to an example that does not fall under the scope of the claims, the method of transmitting a message comprises the step of transmitting an offload message when one of interference caused by a cellular user terminal and interference experienced by said cellular user terminal exceeds a certain threshold, said offload message comprising at least one of a request for said cellular user terminal to connect to a controller of said non-cellular network and a request for said controller to connect to said cellular user terminal and at least one of an identifier identifying said non-cellular network, an identifier identifying said controller and an identifier identifying said cellular user terminal.

In another aspect of the invention, a base station for use in the mobile communication system of the invention, coupled to a cellular communication network, comprises at least one transmitter for transmitting wireless signals to at least one of a cellular user terminal and a controller of a non-cellular network and a processor configured to use at least one of said at least one transmitter to transmit an offload message to at least one of said cellular user terminal and said controller when interference caused by said cellular user terminal measured by an interference measurement component exceeds a certain threshold, said offload message comprising at least one of a request for said cellular user terminal to connect to said controller and a request for said controller to connect to said cellular user terminal and at least one of an identifier identifying said non-cellular network, an identifier identifying said controller and an identifier identifying said cellular user terminal.

In an example that does not fall under the scope of the claims, a cellular user terminal for use in the mobile communication system of the invention comprises at least one receiver for receiving wireless signals from a base station and from a controller of a non-cellular network, at least one transmitter for transmitting wireless signals to said base station and to said controller, and a processor configured to use at least one of said at least one receiver to receive an offload message, said offload message comprising a request for said cellular user terminal to connect to said controller and comprising at least one of an identifier identifying said non-cellular network and an identifier identifying said controller, and to use at least one of said at least one transmitter to establish a connection with said controller.

In yet another aspect of the invention, a controller of a non-cellular network for use in the mobile communication system of the invention comprises at least one receiver for receiving wireless signals from a base station and from at least one non-cellular user terminal, at least one transmitter for transmitting wireless signals to at least one non-cellular user terminal, and a processor configured to use at least one of said at least one receiver to receive an offload message, said offload message comprising a request for said controller to connect to a cellular user terminal and comprising an identifier identifying said cellular user terminal, and to use at least one of said at least one transmitter to establish a connection with said cellular user terminal. Although being a controller of a non-cellular network, said controller may also be configured to communicate with the base station in a cellular mode.

In an example that does not fall under the scope of the claims, a computer-implemented data format describes an offload message which comprises at least one of a request for a cellular user terminal to connect to a controller of a non-cellular network and a request for said controller to connect to said cellular user terminal and at least one of an identifier identifying said non-cellular network, an identifier identifying said controller and an identifier identifying said cellular user terminal. If multiple types of devices, e.g. both the base station and the controller, transmit an offload message, the specific format of the two offload messages may be different.

Moreover, in another example that does not fall under the scope of the claims, one or more computer programs for carrying out the methods described herein, as well as a non-transitory computer readable storage-medium storing one or more of the computer programs are provided. A computer program may, for example, be downloaded by or uploaded to an existing device or be stored upon manufacturing of these systems.

A non-transitory computer-readable storage medium stores at least one software code portion, the software code portion, when executed or processed by a computer, being configured to perform executable operations comprising: receiving an offload message, said offload message comprising at least one of a request for a cellular user terminal to connect to a controller of a non-cellular network and a request for said controller to connect to said cellular user terminal and at least one of an identifier identifying said non-cellular network, an identifier identifying said controller and an identifier identifying said cellular user terminal, and establishing a connection between said cellular user terminal and said non-cellular network controller.

The same or a different non-transitory computer-readable storage medium stores at least one software code portion, the software code portion, when executed or processed by a computer, being configured to perform executable operations comprising: transmitting an offload message when one of interference caused by a cellular user terminal and interference experienced by said cellular user terminal exceeds a certain threshold, said offload message comprising at least one of a request for said cellular user terminal to connect to a controller of said non-cellular network and a request for said controller to connect to said cellular user terminal and at least one of an identifier identifying said non-cellular network, an identifier identifying said non-cellular network controller and an identifier identifying said cellular user terminal.

As will be appreciated by one skilled in the art, aspects of the present invention may be embodied as a device, a method or a computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Functions described in this disclosure may be implemented as an algorithm executed by a processor/microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples of a computer readable storage medium may include, but are not limited to, the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of the present invention, a computer readable storage medium may be any tangible medium that can contain, or store, a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the present invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or a central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of devices, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

The invention is set out in the appended set of claims.

### Brief description of the Drawings

These and other aspects of the invention are apparent from and will be further elucidated, by way of example, with reference to the drawings, in which:
- Fig. 1 is a block diagram of a first embodiment of the system of the invention;
- Fig. 2 is a block diagram of a second embodiment of the system of the invention;
- Fig. 3 illustrates a first example of the system of the invention in use;
- Fig. 4 illustrates a second example of the system of the invention in use;
- Fig. 5 is a flow diagram of the method of receiving a message according to the invention;
- Fig. 6 is a flow diagram of the method of transmitting a message according to the invention;
- Fig. 7 is a block diagram of the computer-implemented data format according to the invention;
- Fig.8 is a block diagram of an exemplary cellular telecommunication system comprising the mobile communication system of the invention; and
- Fig. 9 is a block diagram of an exemplary data processing system for performing the method of the invention.

Corresponding elements in the drawings are denoted by the same reference numeral.

### Detailed description of the Drawings

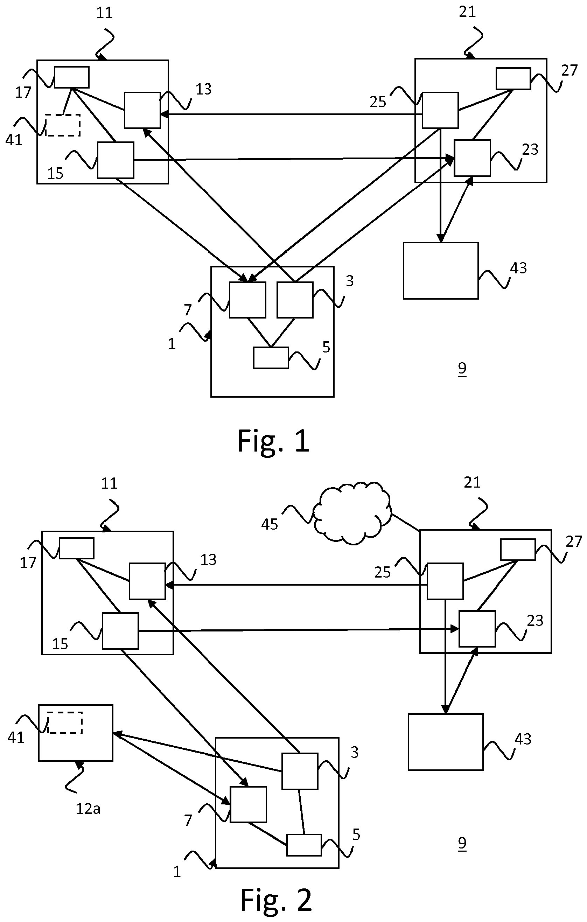

The mobile communication system **9** of the invention comprises a base station **1** (e.g. an LTE eNodeB), a cellular user terminal **11** (e.g. an LTE UE), a controller **21** and an interference measurement component **41,** see **Fig.1. Fig.1** shows a first embodiment of the system of the invention. The base station **1** is coupled to a cellular communication network. The cellular user terminal **11** is configured to transmit wireless signals to the base station **1** and to receive wireless signals from the base station **1.** The controller **21** is configured to control at least one non-cellular network and to receive wireless signals from at least one non-cellular user terminal **43.** The interference measurement component **41** is configured to measure at least one of interference caused by the cellular user terminal **11** and interference experienced by the cellular user terminal **11.** The base station **1** is configured to transmit an offload message to at least one of the cellular user terminal **11** and the controller **21** when the interference measured by the interference measurement component **41** exceeds a certain threshold. The offload message comprises at least one of a request for the cellular user terminal **11** to connect to the controller **21** and a request for the controller **21** to connect to the cellular user terminal **11.** The offload message further comprises at least one of an identifier identifying the non-cellular network, an identifier identifying the controller **21** and an identifier identifying the cellular user terminal **11.**

The cellular communication network may be an LTE, GPRS, CDMA or UMTS network, for example. The non-cellular network may use technologies such as Wi-Fi (IEEE 802.11), WiMAX and Bluetooth, but may also use cellular technologies, e.g. LTE Proximity Services (including LTE D2D and LTE Direct) and 5G ad-hoc network, for example. The controller **21** could be any suitable non-cellular user terminal, for example. The controller **21** may comprise a dedicated Wi-Fi access point or a software access point embedded in a user terminal, for example. In an embodiment, at least one of the cellular user terminal **11** and the controller **21** comprises at least part of the interference measurement component **41.** In **Fig. 1****,** the interference measurement component **41** is shown as part of the cellular user terminal **11.** Alternatively, the interference measurement component **41** could be part of the controller **21** or of another cellular user terminal, for example.

The interference measurement component **41** may be configured to measure a Signal-to-Noise Ratio (SNR), a Signal-to-Interference Ratio (SIR) or a Signal-to-Interference plus Noise Ratio (SINR) of one or more cellular user terminals and when this exceeds a threshold and one or more cellular user terminals are in range of a non-cellular network, offload these cellular user terminals to the non-cellular network, for example. Alternatively, one or more cellular user terminals may measure interference from one or more specific (other) cellular user terminals, for example. The latter may result in a check whether the cellular user terminal(s) that are causing interference or the cellular user terminal(s) that are experiencing interference can be offloaded to a non-cellular network. Alternatively, one or more cellular user terminals and/or one or more non-cellular user terminals may measure whether they cause interference to or experience interference from each other. The decision to offload a cellular user terminal **11** to a non-cellular network may be taken by the interference measurement component **41,** by the base station **1** or by a device in the cellular communication network, for example.

To measure interference the following first approach could be used. First, interference could be detected in the frequency domain by a device or controller. Once interference is detected, the actual interfering device needs to be found. For this purpose the controller could listen to the communications by the devices and record the timeslot(s) and/or frequencies used or could even demodulate the communications and record a device ID or other data. This information could be sent to the base station which could then identify the exact interfering device.

Alternatively or additionally, a second approach could be used. The base station could measure transmissions from the cellular terminals connected to it. Even though these transmissions are signals and not interference to the particular cellular terminal for which they are intended, they are interference to other cellular terminals. So the base station does not measure signal to noise ratios, but simply measures interference. The base station may be aware of other cellular terminals / cellular communications to which these transmissions would cause interference. Offloading would be advisable if the base station could determine / calculate that interference caused by the cellular terminal would be too high.

Furthermore, another base station may measure interference from cellular terminals not connected to it. In that case, further analysis is needed to find out which terminals are interfering (as described in relation to the first approach). Offloading is advisable if received interference is too high (and the cellular terminal can be identified and the base station the cellular terminal is connected to can be identified). A cellular terminal can measure signal to interference ratios for the communication it receives. In this case offloading is advisable if the ratios are too high.

A cellular terminal may also use dedicated time slot/period in which it is not receiving a signal to measure interference. This is beneficial when the interference can be assumed uncorrelated with the time period / slot in which reception takes place. It is also possible that the cellular terminal performs measurements, provides measurement data to the base station and that the base station makes the decision.

It is not necessarily the base station itself that performs the functions, but it could also be a controller or function associated with a particular base station (e.g. a Radio Network Controller). A base station may comprise separate functions that are physically separated (e.g. a radio head and a cloud based transceiver (Cloud-RAN) and/or a base station controller).

In the embodiment shown in **Fig.1****,** the base station **1** is configured to transmit an offload message to the controller **21** when the interference measured by the interference measurement component **41** exceeds a certain threshold, the offload message comprising an identifier identifying the cellular user terminal **11.** The controller **21** could then contact the cellular user terminal **11** to inform it that it can transmit data to the Internet and/or to the cellular communication network via the controller **21.** Alternatively, the base station **1** could contact the cellular user terminal **11** itself. In this case, the offload message may inform the controller **21** that it should accept a connection request transmitted by the cellular user terminal **11** to the controller **21.**

In an embodiment, the connection between the cellular user terminal **11** and the controller **21** replaces an existing connection between the cellular user terminal **11** and the base station **1.** The cellular user terminal **11** may terminate any existing direct connections to the base station **1,** or a selection thereof, and setup similar connections via the controller **21,** for example. In the same or in a different embodiment, the cellular user terminal **11** is configured to, after the cellular user terminal **11** and the controller **21** have connected, setup by the cellular user terminal **11** any new connection to the Internet via the controller **21** until further notice. New connections other than to the Internet may be setup via the controller **21** as well. If the interference conditions change, e.g. as measured by the interference measurement component **41,** the cellular user terminal **11** and/or the controller **21** may be notified of this change. The user terminal **11** may then start setting up new connections to the Internet via the base station **1** again or via another base station or another controller.

In an embodiment, the controller **21** is configured to relay at least part of information sent by the cellular user terminal **11** to the controller **21** to at least one of the base station **11** and the cellular communication network. For example, the controller **21** may be able to behave as if it were a cellular user terminal. The controller **21** may have a special status to allow it to send data at a higher data rate or at a higher priority to the base station **11.**

In an embodiment, the base station **1** is configured to relay at least some information intended for the cellular user terminal **11** via the controller **21**. For example, the base station **1** may register for which cellular user terminals traffic should be relayed and via which controller and consult this registry before transmitting data packets to cellular user terminals. In this case, it may not be visible for other devices in the cellular communication network that cellular user terminal **11** has been offloaded. Alternatively, an instruction to relay information intended for the cellular user terminal **11** via the controller **21** may be registered in the cellular communication network (for example in the Evolved Packet Core, the Mobility Management Entity, or the Home Subscriber Registry).

The base station **1** comprises at least one transmitter **3** for transmitting wireless signals to the cellular user terminal **11** and the controller **21** of the non-cellular network and a processor **5** configured to use at least one of the at least one transmitter **3** to transmit an offload message to at least one of the cellular user terminal **11** and the controller **21** when one of interference caused by the cellular user terminal **11** and interference experienced by the cellular user terminal **11** measured by an interference measurement component **41** exceeds a certain threshold.

The cellular user terminal **11** comprises at least one receiver **13** for receiving wireless signals from the base station **1** and from the controller **21** of the non-cellular network, at least one transmitter **15** for transmitting wireless signals to the base station **1** and to the controller **21,** and a processor **17** configured to use at least one of the at least one receiver **13** to receive an offload message from the base station **1** and/or the controller **21.**

The controller **21** of the non-cellular network comprises at least one receiver **23** for receiving wireless signals from the base station **1** and from a non-cellular user terminal **43,** at least one transmitter **25** for transmitting wireless signals to the non-cellular user terminal **43,** and a processor **27** configured to use at least one of the at least one receiver **23** to receive an offload message from the base station **1.**

In the embodiment shown in **Fig. 2****,** the controller **21** is configured to relay at least part of information sent by the cellular user terminal **11** to the controller **21** to a further non-cellular network **45** coupled to the Internet instead of to the base station **1.** In the embodiment shown in **Fig.2****,** the cellular user terminal **11** has the proper credentials to connect to controller **21,** e.g. controller **21** controls a home or company network, and there is no direct connection between base station **1** and controller **21.** In this embodiment, the base station **1** is configured to transmit an offload message to the cellular user terminal **11** when the interference measured by the interference measurement component **41** (in this embodiment comprised in a cellular user terminal **12a)** exceeds a certain threshold, the offload message comprising at least one of an identifier identifying the non-cellular network and an identifier identifying the controller **21.**

In an alternative embodiment, the further non-cellular network may be operated by the same operator as the cellular communication network or the operators of both networks may have an agreement to allow cellular user terminals to access the non-cellular network. In this case, the base station **1** and the controller **21** may communicate directly and communication from the cellular user terminal **11** with services hosted by the operator of the cellular communication network may go via the controller **21** to the base station **1,** for example.

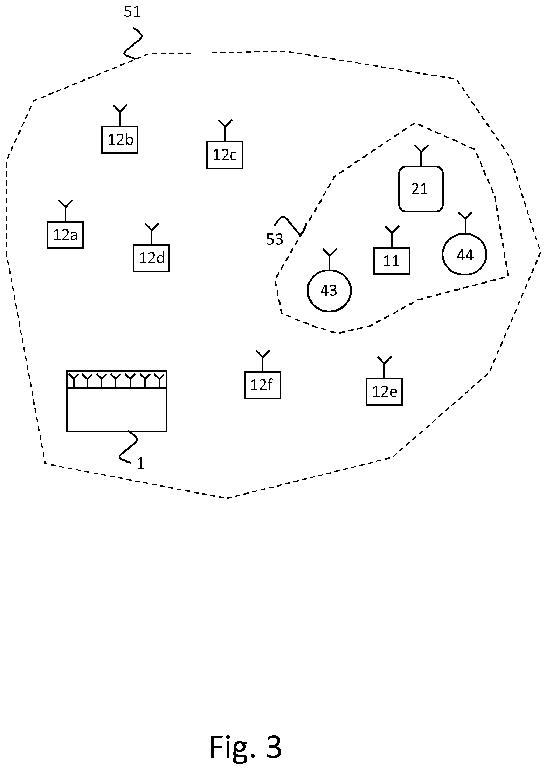

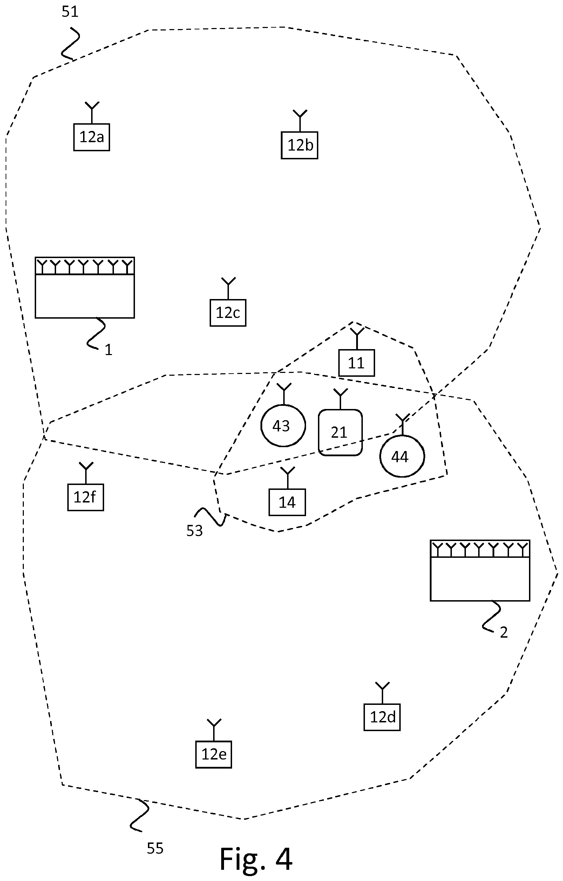

**Figs. 3** and **4** show embodiments of the system of the invention in use. **Fig. 3** shows a base station **1** with an antenna array that serves a service area **51** that contains multiple cellular user terminals **11, 12a-12f.** The geographical area that is served by the base station **1** also contains an ad hoc network with several ad hoc terminals **21, 43** and **44.** The physical area **53** served by the ad hoc network comprises cellular user terminal **11** served by the base station **1.**

The ad hoc network may comprise a set of devices that communicate by using device-to-device communications. Furthermore, one of the ad hoc terminals **21, 43** and **44** may be serving as a gateway towards the base station for the other ones of the ad hoc terminals **21, 43** and **44** in the ad hoc network. The ad hoc network may use a different frequency band than the base station **1.** This may limit direct interference between the cellular user terminals in the service area **51** and the ad hoc network. However, adjacent channel interference may still be caused by cellular user terminals in the service area **51** to the devices in the ad hoc network.

One of the ad hoc terminals **21, 43** and **44** may control the configuration of the ad hoc network. In **Fig.3****,** the ad hoc terminal **21** is such a controller. The controller **21** may for instance implement a local base station for the ad hoc network. The ad hoc network terminals **43** and **44** are non-cellular user terminals transmitting wireless signals to and receiving wireless signals from controller **21.**

In **Fig.3****,** the cellular user terminal **11** may cause interference to cellular user terminal **12f,** because cellular user terminal **11** is relatively far away from base station **1** and needs to use a relatively high transmit power, or cellular user terminal **11** may cause interference to or experience interference from non-cellular user terminals **43** and **44,** because the ad hoc network is using a channel band adjacent to the channel band used by base station **1.** This interference is removed by offloading cellular user terminal **11** to the ad hoc network. The ad hoc network may then relay traffic received from cellular user terminal **11** to the base station **1,** for example. The devices offloaded to the ad hoc network are synchronized to the ad hoc network and use the same frequency band as the ad hoc network. Hence the off loaded devices do not cause interference to the ad hoc network anymore. Also, the offloaded devices may use less power in the ad hoc network than in the cellular network, thereby reducing the total amount of adjacent channel interference (from the cellular user terminals to the ad hoc network and vice versa). The destination terminal for part of the traffic of the offloaded devices may be one of the other terminals in the ad-hoc network. In that case offloading communication is especially beneficial.

The base station **1** that serves the service area **51** may also cause interference to the ad hoc network itself. To reduce such interference the base station **1** may generate a set of transmission nulls corresponding to the ad hoc terminals **21, 43** and **44.** Such nulls may be generated with multiple antenna techniques and/or beamforming.

An example of a first application of the invention is an ad hoc network setup between devices used by a medical responder team. For instance, one or multiple ambulances may arrive at a scene of an accident. Equipment such as mobile devices to measure electrocardiograms (ECGs) may be in communication with other devices used by the medical responder team and the ambulances. For this purpose an ad hoc network may be set up, and cellular user terminals may be offloaded to this ad hoc network to limit interference.

An example of a second application of the invention is a set of devices used by a single user at home. These devices may for instance include a desktop computer, a notebook, an iPad, a mobile phone, and a router connected to the Internet. Furthermore, the Internet subscription of the user may be from an operator that also operates a base station in the area. The devices of the user may communicate with device-to-device communications and setup an ad hoc network. Other devices in the cell served by the base station of the operator may then be offloaded to the ad hoc network in case these devices cause too much interference. The ad hoc network may then use the Internet connection of the user to forward data to and from the offloaded devices.

An example of a third application of the invention is a mobile ad hoc LTE network used by military vehicles to stay in contact with each other for the purpose of extended situational awareness and command and control. Whenever one of the vehicles can connect to any available static network the other vehicles route their messages via that first vehicle to create long range connectivity. Examples of a connection to a static network are a satellite link, an LTE mobile base station or a Wi-Fi hotspot.

When on the move, the vehicles will stay close enough to each other to maintain connectivity to each other, but will frequently lose connectivity to static networks. Any vehicle that can get a connection to a static network will make this connection and allow the other vehicles to use this as a backhaul. If one of the vehicles gets close to an LTE mobile base station it may connect to that base station. As a result, any activity from other users on that base station will interfere with the mobile ad hoc LTE communication between the vehicles. Furthermore, the traffic generated by those users will also use bandwidth capacity of the base station. By offloading all the users of the static LTE base station to the mobile ad hoc LTE network it is possible to not only regulate the radio traffic to prevent interference on the radio level but it is also possible for the attached vehicle of the mobile ad hoc LTE network to manage bandwidth on the connection and give priority to all the military communications.

In **Fig.4****,** a further base station **2** with an antenna array that serves a service area **55** is shown. Cellular user terminals **12a-c** and **11** connect to the base station **1.** Cellular user terminals **12d-f** and **14** connect to the further base station **2.** The physical area **53** served by the ad hoc network overlaps with both the service area **51** served by base station **1** and the service area **55** served by further base station **2.** The cellular user terminal **11** is connected to the base station **1** and causes interference to cellular user terminal **12c,** experiences interference from the ad hoc network and/or causes interference to the ad hoc network. The cellular user terminal **14** is connected to the base station **2** and experiences interference from cellular user terminal **12f,** experiences interference from the ad hoc network and/or causes interference to the ad hoc network. Both cellular user terminal **11** and cellular user terminal **14** can be offloaded to the ad hoc network to avoid this interference.

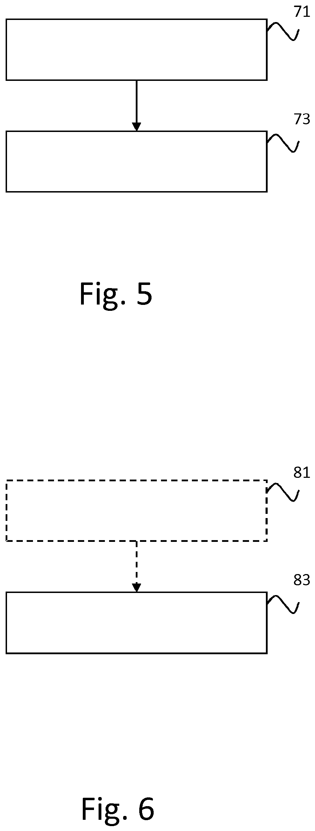

A non-claimed method of receiving a message comprises two steps, see **Fig.5****.** A step **71** comprises receiving an offload message, the offload message comprising at least one of a request for a cellular user terminal to connect to a controller of a non-cellular network and a request for the controller to connect to the cellular user terminal and at least one of an identifier identifying the non-cellular network, an identifier identifying the controller and an identifier identifying the cellular user terminal. A step **73** comprises establishing a connection between the cellular user terminal and the controller. This connection may be initiated by either the cellular user terminal or the controller.

A non-claimed method of transmitting a message comprises at least one step. A step **83,** see **Fig. 6****,** comprises transmitting an offload message when one of interference caused by a cellular user terminal and interference experienced by the cellular user terminal exceeds a certain threshold, the offload message comprising at least one of a request for the cellular user terminal to connect to a controller of the non-cellular network and a request for the controller to connect to the cellular user terminal and at least one of an identifier identifying the non-cellular network, an identifier identifying the non-cellular network controller and an identifier identifying the cellular user terminal. Step **83** is preferably preceded by a step **81.** Step **81** comprises determining whether one of interference caused by a cellular user terminal and interference experienced by the cellular user terminal exceeds a certain threshold.

In an embodiment of the method, step **81** involves first detecting the presence of an ad hoc network in the geographical area served by the base station. For this purpose the non-cellular/ad hoc user terminals of the ad hoc network may announce their presence in the cell to the base station. The base station may also monitor the use of spectrum and detect an increased usage of spectrum. Such increased usage may correspond to the presence of an ad hoc network. In this embodiment, step **81** further involves the base station collecting data on the amount of interference that cellular user terminals in the cell cause or experience. The controller of the ad hoc network may actively measure the response or channel from the cellular user terminals to devices in the ad hoc network, for example. The controller may monitor, for instance, transmissions initiated by the cellular user terminals in the cell and measure the amount of interference or adjacent channel interference received. The controller may further receive interference measurements from the non-cellular/ad hoc user terminals. The controller may send interference measurements by the controller and/or by the non-cellular/ad hoc user terminals to the base station.

In this embodiment, step **81** also involves selecting a subset of cellular user terminals that cause or experience a high level of interference and are in the physical area served by the detected ad hoc network(s). The amount of interference caused or experienced by a cellular user terminal may be expressed in terms of a signal-to-interference ratio (SINR) or signal-to-noise ratio (SNR) for each of the non-cellular user terminals and/or other cellular user terminals. The selected subset of cellular user terminals may contain the N devices that cause or experience the largest degradation in SINR and SNR. For these devices, offloading messages are transmitted in step **83.**

After steps **83** and **73,** a relay may be established from the ad hoc network to the base station. Inbound and outbound traffic of the cellular user terminals that are offloaded to the ad hoc network can be relayed to and from the base station to the ad hoc network. The number of cellular user terminals offloaded to the ad hoc network (N) may depend on the relay capacity of the ad hoc network and the quality of service and data rate required by the cellular user terminals. Offloading cellular user terminals to a non-cellular network (a Wi-Fi or LTE Direct network, for example) may be repeated a number of times and the number of devices offloaded may change. An additional advantage of the offloading for the cellular user terminals is that they may require less power to reach the controller than to reach the base station. This saves battery power of the cellular user terminals.

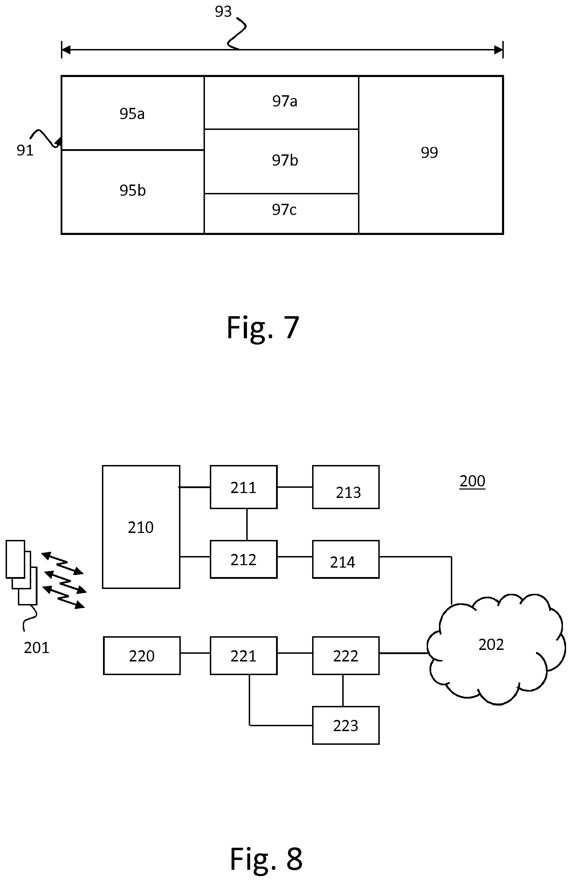

The computer-implemented data format describes an offload message **91,** see **Fig.7****.** The offload message **91** comprises at least one of a request **95a** for a cellular user terminal to connect to a controller of a non-cellular network and a request **95b** for the controller to connect to the cellular user terminal. The request **95a** and/or the request **95b** may be a header field indicating a message type, for example. The offload message **91** further comprises at least one of an identifier **97a** identifying the non-cellular network, e.g. a Wi-Fi SSID, an identifier **97b** identifying the controller, e.g. a Bluetooth device name, and an identifier **97c** identifying the cellular user terminal, e.g. a Radio Network Temporary Identifier (RNTI), an International Mobile Subscriber Identifier (IMSI), a Temporary Mobile Subscriber Identifier (TMSI) or a Globally Unique Temporary ID (GUTI).

In an embodiment, the controller may be able to broadcast a message requesting the identified cellular user terminal to connect to the controller. If the controller receives an offload message and it is not able to initiate a connection with the cellular user terminal itself, the base station may send an offload message to the cellular user terminal and the controller can use the offload message it has received to verify whether it should grant access to a cellular user terminal contacting it.

The offload message **91** may be specified in the PDCP, RLC or MAC layer of the LTE protocol stack, for example. The offload message **91** may further comprise access credentials **99,** e.g. for allowing the cellular user terminal to get access to the controller of the non-cellular network if the controller has not received an offload message from the base station. The access credentials **99** may comprise a passkey, for example. The offload message **91** may also comprise a cryptographic signature such that e.g. the cellular terminal can verify the authenticity of the offload message **91** by verifying the cryptographic signature.

The offload message **91** may also specify what type of traffic should be offloaded. For instance the offload message may specify that all traffic that requires a high bitrate (e.g. >1 Mbit/s) should be offloaded. Furthermore, the offload message **91** may specify a duration during which traffic should be offloaded. The offload message **91** may also specify which radio channels or carriers should be offloaded. This is useful in a setting where a cellular terminal is using multiple radio channels and/or carriers but not all cause interference.

The mobile communication system **9** of **Fig.1** is preferably part of a cellular telecommunications system. **Fig. 8** shows a schematic illustration of a cellular telecommunications system **200.** The telecommunications system **200** comprises cellular radio access network systems **210** (E-UTRAN) and **220** (UT(RAN)) and a core network system containing various elements or nodes as described in further detail below.

In the telecommunications system **200** of **Fig. 8****,** three generations of networks are schematically depicted together for purposes of brevity. A more detailed description of the architecture and overview can be found in 3GPP Technical Specification TS 23.002 'Network Architecture' which is included in the present application by reference in its entirety.

The lower branch of **Fig. 8** represents a GSM/GPRS or UMTS network.

For a GSM/GPRS network, a radio access network (RAN) system **220** comprises a plurality of nodes, including base stations (combination of a BSC and a BTS), not shown individually in **Fig. 8****.** The core network system comprises a Gateway GPRS Support Node 222 (GGSN), a Serving GPRS Support Node **221** (SGSN, for GPRS) or Mobile Switching Centre (MSC, for GSM, not shown in **Fig. 8****)** and a Home Location Register **223** (HLR). The HLR **223** contains subscription information for user devices **201,** e.g. mobile stations MS.

For a UMTS radio access network (UTRAN), the radio access network system **220** also comprises a Radio Network Controller (RNC) connected to a plurality of base stations (NodeBs), also not shown individually **Fig. 8****.** In the core network system, the GGSN **222** and the SGSN **221**/MSC are connected to the HLR **223** that contains subscription information of the user devices **201,** e.g. user equipment UE.

The upper branch of the telecommunications system in **Fig. 8** represents a next generation network, commonly indicated as Long Term Evolution (LTE) system or Evolved Packet System (EPS).

The radio access network system **210** (E-UTRAN), comprises base stations (evolved NodeBs, eNodeBs or eNBs), not shown individually in **Fig. 8****,** providing cellular wireless access for a user device **201,** e.g. a user equipment UE. The core network system comprises a PDN Gateway (P-GW) **214** and a Serving Gateway **212** (S-GW). The E-UTRAN **210** of the EPS is connected to the S-GW **212** via a packet network. The S-GW **212** is connected to a Home Subscriber Server HSS **213** and a Mobility Management Entity MME **211** for signalling purposes. The HSS **213** includes a subscription profile repository SPR for user devices **201.**

For GPRS, UMTS and LTE systems, the core network system is generally connected to a further packet network **202,** e.g. the internet.

Further information of the general architecture of an EPS network can be found in 3GPP Technical Specification TS 23.401 'GPRS enhancements for Evolved Universal Terrestrial Radio Access Network (E-UTRAN) access'.

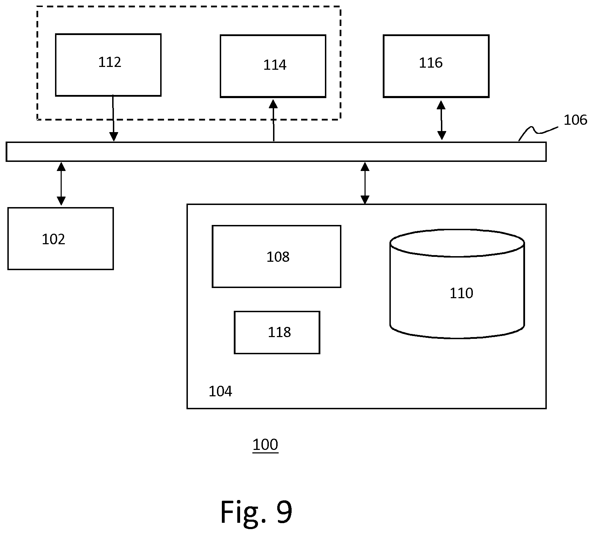

**Fig. 9** depicts a block diagram illustrating an exemplary data processing system that may perform the method as described with reference to **Figs. 5 and 6****.**

As shown in **Fig. 9****,** the data processing system **100** may include at least one processor **102** coupled to memory elements **104** through a system bus **106.** As such, the data processing system may store program code within memory elements **104.** Further, the processor **102** may execute the program code accessed from the memory elements **104** via a system bus **106.** In one aspect, the data processing system may be implemented as a computer that is suitable for storing and/or executing program code. It should be appreciated, however, that the data processing system **100** may be implemented in the form of any system including a processor and a memory that is capable of performing the functions described within this specification.

The memory elements **104** may include one or more physical memory devices such as, for example, local memory **108** and one or more bulk storage devices **110.** The local memory may refer to random access memory or other non-persistent memory device(s) generally used during actual execution of the program code. A bulk storage device may be implemented as a hard drive or other persistent data storage device. The processing system **100** may also include one or more cache memories (not shown) that provide temporary storage of at least some program code in order to reduce the number of times program code must be retrieved from the bulk storage device **110** during execution.

Input/output (I/O) devices depicted as an input device **112** and an output device **114** optionally can be coupled to the data processing system. Examples of input devices may include, but are not limited to, a keyboard, a pointing device such as a mouse, or the like. Examples of output devices may include, but are not limited to, a monitor or a display, speakers, or the like. Input and/or output devices may be coupled to the data processing system either directly or through intervening I/O controllers.

In an embodiment, the input and the output devices may be implemented as a combined input/output device (illustrated in **Fig. 9** with a dashed line surrounding the input device **112** and the output device **114).** An example of such a combined device is a touch sensitive display, also sometimes referred to as a "touch screen display" or simply "touch screen". In such an embodiment, input to the device may be provided by a movement of a physical object, such as e.g. a stylus or a finger of a user, on or near the touch screen display.

A network adapter **116** may also be coupled to the data processing system to enable it to become coupled to other systems, computer systems, remote network devices, and/or remote storage devices through intervening private or public networks. The network adapter may comprise a data receiver for receiving data that is transmitted by said systems, devices and/or networks to the data processing system **100,** and a data transmitter for transmitting data from the data processing system **100** to said systems, devices and/or networks. Modems, cable modems, and Ethernet cards are examples of different types of network adapter that may be used with the data processing system **100.**

As pictured in **Fig. 9****,** the memory elements **104** may store an application **118.** In various embodiments, the application **118** may be stored in the local memory **108,** the one or more bulk storage devices **110,** or separate from the local memory and the bulk storage devices. It should be appreciated that the data processing system **100** may further execute an operating system (not shown in **Fig. 9****)** that can facilitate execution of the application **118.** The application **118,** being implemented in the form of executable program code, can be executed by the data processing system **100,** e.g., by the processor **102.** Responsive to executing the application, the data processing system **100** may be configured to perform one or more operations or method steps described herein.

Various embodiments of the invention may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored. The computer program may be run on the processor **102** described herein.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

## Claims

1. A mobile communication system (9), comprising:
a base station (1) coupled to a cellular communication network;
a cellular user terminal (11) configured to transmit wireless signals to said base station (1) and to receive wireless signals from said base station (1);
a controller (21) configured to control at least one non-cellular network and to receive wireless signals from at least one non-cellular user terminal (43); and
an interference measurement component (41);
wherein said base station (1) is configured to transmit an offload message to at least one of a) said cellular user terminal (11) wherein said offload message comprises i) a request for said cellular user terminal (11) to connect to said controller (21) and ii) at least one of an identifier identifying said non-cellular network and an identifier identifying said controller (21), and b) said controller (21), wherein said offload message comprises iii) a request for said controller (21) to connect to said cellular user terminal (11) and iv) an identifier identifying said cellular user terminal (11),
**characterised in that**:
said controller (21) comprises at least part of said interference measurement component (41), and said interference measurement component is configured to measure interference caused by said cellular user terminal (11) to other user terminals;
said base station is further configured to receive from the controller, interference measurements performed by the controller and/or by the at least one non-cellular terminal, and is further configured to transmit said offload message when said interference measured by said interference measurement component (41) exceeds a certain threshold; and
said controller is further configured to relay at least part of information sent by said cellular user terminal to said controller to at least one of said base station, said cellular network, and a further non-cellular network coupled to the Internet, or to relay at least some information from said base station and intended for said cellular user terminal via said controller to said cellular user terminal.

2. A mobile communication system (9) as claimed in claim 1, wherein said base station (1) is configured to transmit an offload message to said cellular user terminal (11) when said interference measured by said interference measurement component (41) exceeds a certain threshold, said offload message comprising at least one of an identifier identifying said non-cellular network and an identifier identifying said controller (21).

3. A mobile communication system (9) as claimed in any one of claims 1 to 2, wherein said base station (1) is configured to transmit an offload message to said controller (21) when said interference measured by said interference measurement component (41) exceeds a certain threshold, said offload message comprising an identifier identifying said cellular user terminal (11).

4. A mobile communication system (9) as claimed in any of claims 1 to 3, wherein said connection between said cellular user terminal (11) and said controller (21) replaces an existing connection between said cellular user terminal (11) and said base station (1).

5. A mobile communication system (9) as claimed in any of claims 1 to 4, wherein said cellular user terminal (11) is configured to, after said cellular user terminal (11) and said controller (21) have connected, setup any new connection to the Internet via said controller (21) until further notice.

6. A mobile communication system (9) as claimed in any of claims 1 to 5, wherein said controller (21) is configured to relay at least part of information sent by said cellular user terminal (11) to said controller (21) to at least one of said base station (11) and said cellular communication network.

7. A mobile communication system (9) as claimed in any of claims 1 to 6, wherein said controller (21) is configured to relay at least part of information sent by said cellular user terminal (11) to said controller (21) to a further non-cellular network coupled to the Internet instead of to said base station (1).

8. A mobile communication system (9) as claimed in any of claims 1 to 7, wherein said base station (1) is configured to relay at least some information intended for said cellular user terminal (11) via said controller (21).

9. A base station (1) for use in a mobile communication system (9) of any of claims 1 to 8 coupled to a cellular communication network, comprising:
at least one transmitter (3) for transmitting wireless signals to at least one of a cellular user terminal (11) and a controller (21) of a non-cellular network; and
a processor (5) configured to use at least one of said at least one transmitter (3) to transmit an offload message to at least one of a) said cellular user terminal (11) wherein said offload message comprises i) a request for said cellular user terminal (11) to connect to said controller (21) and ii) at least one of an identifier identifying said non-cellular network and an identifier identifying said controller (21), and b) said controller, wherein said offload message comprises iii) a request for said controller (21) to connect to said cellular user terminal (11) and iv) an identifier identifying said cellular user terminal (11),
**characterised in that**:
the base station (1) is further configured to receive from the controller, interference measurements performed by the controller and/or by the at least one non-cellular terminal,
the transmitter is further configured to transmit said offload message when interference caused by said cellular user terminal (11) to other terminals as measured by an interference measurement component (41) exceeds a certain threshold, and
the base station is further configured to relay at least some information intended for said cellular user terminal (11) via said controller (21).

10. A controller (21) of a non-cellular network for use in a mobile communication system (9) of any of claims 1 to 8, comprising:
at least one receiver (23) for receiving wireless signals from a base station (1) and from at least one non-cellular user terminal (11);
at least one transmitter (25) for transmitting wireless signals to at least one non-cellular user terminal (21); and
a processor (27) configured to use at least one of said at least one receiver (23) to receive an offload message, said offload message comprising a request for said controller (21) to connect to at least one cellular user terminal (11) and at least one identifier identifying said at least one cellular user terminal (11), and to use at least one of said at least one transmitter (25) to establish a connection with said at least one cellular user terminal (11),
**characterized in that** the processor is configured to send interference measurements by the controller and/or by the at least one non-cellular terminals to the base station, the interference measurements measuring the amount of interference caused by said cellular user terminal to other user terminals, and to receive said offload message when the measured interference exceeds a certain threshold; and
said controller is further configured to relay at least part of information sent by said cellular user terminal to said controller to at least one of said base station, said cellular network, and a further non-cellular network coupled to the Internet, or to relay at least some information from said base station and intended for said cellular user terminal via said controller to said cellular user terminal.

## Patentansprüche

1. Mobilkommunikationssystem (9), umfassend:
eine Basisstation (1), die mit einem zellularen Kommunikationsnetz gekoppelt ist;
ein zellulares Benutzerendgerät (11), das dafür ausgelegt ist, Drahtlossignale an die Basisstation (1) zu senden und Drahtlossignale von der Basisstation (1) zu empfangen;
eine Steuerung (21), die dafür ausgelegt ist, mindestens ein nicht-zellulares Netz zu steuern und Drahtlossignale von mindestens einem nicht-zellularen Benutzerendgerät (43) zu empfangen; und
eine Störungsmesskomponente (41);
wobei die Basisstation (1) dafür ausgelegt ist, eine Offload-Nachricht an mindestens eines der folgenden Elemente zu senden: a) das zellulare Benutzerendgerät (11), wobei die Offload-Nachricht i) eine Aufforderung an das zellulare Benutzerendgerät (11), sich mit der Steuerung (21) zu verbinden, und ii) mindestens eines von einer Kennung, die das nicht-zellulare Netz identifiziert, und einer Kennung, die die Steuerung (21) identifiziert, umfasst, und b) die Steuerung (21), wobei die Offload-Nachricht iii) eine Aufforderung an die Steuerung (21), sich mit dem zellularen Benutzerendgerät (11) zu verbinden, und iv) eine Kennung, die das zellulare Benutzerendgerät (11) identifiziert, umfasst, **dadurch gekennzeichnet, dass**:
die Steuerung (21) zumindest einen Teil der Störungsmesskomponente (41) umfasst, und die Störungsmesskomponente dafür ausgelegt ist, die vom zellularen Benutzerendgerät (11) an anderen Benutzerendgeräten verursachten Störungen zu messen;
die Basisstation ferner dafür ausgelegt ist, von der Steuerung Störungsmessungen zu empfangen, die von der Steuerung und/oder vom mindestens einen nicht-zellularen Endgerät durchgeführt werden, und ferner dafür ausgelegt ist, die Offload-Nachricht zu senden, wenn die von der Störungsmesskomponente (41) gemessenen Störungen einen gewissen Schwellenwert überschreiten; und
die Steuerung ferner dafür ausgelegt ist, zumindest einen Teil der vom zellularen Benutzerendgerät an die Steuerung gesendeten Informationen an mindestens eines von der Basisstation, dem zellularen Netz und/oder einem weiteren nicht-zellularen Netz, das mit dem Internet gekoppelt ist, weiterzuleiten, oder zumindest einige Informationen von der Basisstation, die für das zellulare Benutzerendgerät bestimmt sind, über die Steuerung an das zellulare Benutzerendgerät weiterzuleiten.

2. Mobilkommunikationssystem (9) nach Anspruch 1, wobei die Basisstation (1) dafür ausgelegt ist, eine Offload-Nachricht an das zellulare Benutzerendgerät (11) zu senden, wenn die von der Störungsmesskomponente (41) gemessenen Störungen einen gewissen Schwellenwert überschreiten, wobei die Offload-Nachricht mindestens eines von einer Kennung, die das nicht-zellulare Netz identifiziert, und einer Kennung, die die Steuerung (21) identifiziert, umfasst.

3. Mobilkommunikationssystem (9) nach einem der Ansprüche 1 bis 2, wobei die Basisstation (1) dafür ausgelegt ist, eine Offload-Nachricht an die Steuerung (21) zu senden, wenn die von der Störungsmesskomponente (41) gemessenen Störungen einen gewissen Schwellenwert überschreiten, wobei die Offload-Nachricht eine Kennung umfasst, die das zellulare Benutzerendgerät (11) identifiziert.

4. Mobilkommunikationssystem (9) nach einem der Ansprüche 1 bis 3, wobei die Verbindung zwischen dem zellularen Benutzerendgerät (11) und der Steuerung (21) eine bestehende Verbindung zwischen dem zellularen Benutzerendgerät (11) und der Basisstation (1) ersetzt.

5. Mobilkommunikationssystem (9) nach einem der Ansprüche 1 bis 4, wobei das zellulare Benutzerendgerät (11) so ausgelegt ist, dass es, nachdem das zellulare Benutzerendgerät (11) und die Steuerung (21) eine Verbindung hergestellt haben, bis auf weiteres jegliche neue Verbindung zum Internet über die Steuerung (21) aufbaut.

6. Mobilkommunikationssystem (9) nach einem der Ansprüche 1 bis 5, wobei die Steuerung (21) dafür ausgelegt ist, zumindest einen Teil der vom zellularen Benutzerendgerät (11) an die Steuerung (21) gesendeten Informationen an mindestens eines von der Basisstation (11) und dem zellularen Kommunikationsnetz weiterzuleiten.

7. Mobilkommunikationssystem (9) nach einem der Ansprüche 1 bis 6, wobei die Steuerung (21) dafür ausgelegt ist, zumindest einen Teil der vom zellularen Benutzerendgerät (11) an die Steuerung (21) gesendeten Informationen an ein weiteres nicht-zellulares Netz weiterzuleiten, das mit dem Internet statt mit der Basisstation (1) gekoppelt ist.

8. Mobilkommunikationssystem (9) nach einem der Ansprüche 1 bis 7, wobei die Basisstation (1) dafür ausgelegt ist, zumindest einige Informationen, die für das zellulare Benutzerendgerät (11) bestimmt sind, über die Steuerung (21) weiterzuleiten.

9. Basisstation (1) zur Verwendung in einem Mobilkommunikationssystem (9) nach einem der Ansprüche 1 bis 8, die mit einem zellularen Kommunikationsnetz gekoppelt ist, umfassend:
mindestens einen Sender (3) zum Senden von Drahtlossignalen an mindestens eines von einem zellularen Benutzerendgerät (11) und einer Steuerung (21) eines nicht-zellularen Netzes; und
einen Prozessor (5), der dafür ausgelegt ist, mindestens einen vom mindestens einen Sender (3) zum Senden einer Offload-Nachricht an mindestens eines der folgenden Elemente zu verwenden: a) das zellulare Benutzerendgerät (11), wobei die Offload-Nachricht i) eine Aufforderung an das zellulare Benutzerendgerät (11), sich mit der Steuerung (21) zu verbinden, und ii) mindestens eines von einer Kennung, die das nicht-zellulare Netzwerk identifiziert, und einer Kennung, die die Steuerung (21) identifiziert, umfasst, und b) die Steuerung, wobei die Offload-Nachricht iii) eine Aufforderung an die Steuerung (21), sich mit dem zellularen Benutzerendgerät (11) zu verbinden, und iv) eine Kennung, die das zellulare Benutzerendgerät (11) identifiziert, umfasst,
**dadurch gekennzeichnet, dass**:
die Basisstation (1) ferner dafür ausgelegt ist, von der Steuerung Störungsmessungen zu empfangen, die von der Steuerung und/oder vom mindestens einen nicht-zellularen Endgerät durchgeführt werden,
der Sender ferner dafür ausgelegt ist, die Offload-Nachricht zu senden, wenn die vom zellularen Benutzerendgerät (11) an anderen Benutzerendgeräten verursachten Störungen, gemessen durch eine Störungsmesskomponente (41), einen gewissen Schwellenwert überschreiten, und
die Basisstation ferner dafür ausgelegt ist, zumindest einige Informationen, die für das zellulare Benutzerendgerät (11) bestimmt sind, über die Steuerung (21) weiterzuleiten.

10. Steuerung (21) eines nicht-zellularen Netzes zur Verwendung in einem Mobilkommunikationssystem (9) nach einem der Ansprüche 1 bis 8, umfassend:
mindestens einen Empfänger (23) zum Empfang von Drahtlossignalen von einer Basisstation (1) und von mindestens einem nicht-zellularen Benutzerendgerät (11);
mindestens einen Sender (25) zum Senden von Drahtlossignalen an mindestens ein nicht-zellulares Benutzerendgerät (21); und
einen Prozessor (27), der dafür ausgelegt ist, mindestens einen vom mindestens einen Empfänger (23) zum Empfangen einer Offload-Nachricht zu verwenden, wobei die Offload-Nachricht eine Aufforderung an die Steuerung (21), sich mit mindestens einem zellularen Benutzerendgerät (11) zu verbinden, und mindestens eine Kennung, die das mindestens eine zellulare Benutzerendgerät (11) identifiziert, umfasst, und mindestens einen vom mindestens einen Sender (25) zu verwenden, um eine Verbindung mit dem mindestens einen zellularen Benutzerendgerät (11) herzustellen,
**dadurch gekennzeichnet, dass** der Prozessor dafür ausgelegt ist, Störungsmessungen durch die Steuerung und/oder durch das mindestens eine nicht-zellulare Endgerät an die Basisstation zu senden, wobei die Störungsmessungen das Ausmaß der durch das zellulare Benutzerendgerät an anderen Benutzerendgeräten verursachten Störungen messen, und die Offload-Nachricht zu empfangen, wenn die gemessenen Störungen einen gewissen Schwellenwert überschreiten; und
die Steuerung ferner dafür ausgelegt ist, zumindest einen Teil der vom zellularen Benutzerendgerät an die Steuerung gesendeten Informationen an mindestens eines von der Basisstation, dem zellularen Netz und einem weiteren nicht-zellularen Netz, das mit dem Internet gekoppelt ist, weiterzuleiten, oder zumindest einige Informationen von der Basisstation, die für das zellulare Benutzerendgerät bestimmt sind, über die Steuerung an das zellulare Benutzerendgerät weiterzuleiten.

## Revendications

1. Système de communication mobile (9), comprenant :
une station de base (1) couplée à un réseau de communication cellulaire ;
un terminal utilisateur cellulaire (11) configuré pour émettre des signaux sans fil sur ladite station de base (1) et pour recevoir des signaux sans fil en provenance de ladite station de base (1) ;
un contrôleur (21) configuré pour commander au moins un réseau non cellulaire et pour recevoir des signaux sans fil en provenance d'au moins un terminal utilisateur non cellulaire (43) ; et
un composant de mesure d'interférence (41) ;
dans lequel ladite station de base (1) est configurée pour émettre un message de déchargement sur au moins un composant parmi a) ledit terminal utilisateur cellulaire (11), dans lequel ledit message de déchargement comprend i) une demande pour que ledit terminal utilisateur cellulaire (11) soit connecté audit contrôleur (21) et ii) au moins un identifiant parmi un identifiant qui identifie ledit réseau non cellulaire et un identifiant qui identifie ledit contrôleur (21), et b) ledit contrôleur (21), dans lequel ledit message de déchargement comprend iii) une demande pour que ledit contrôleur (21) soit connecté audit terminal utilisateur cellulaire (11) et iv) un identifiant qui identifie ledit terminal utilisateur cellulaire (11),
**caractérisé en ce que** :
ledit contrôleur (21) comprend au moins une partie dudit composant de mesure d'interférence (41), et ledit composant de mesure d'interférence est configuré pour mesurer l'interférence générée par ledit terminal utilisateur cellulaire (11) sur d'autres terminaux utilisateur ;
ladite station de base est en outre configurée pour recevoir, en provenance du contrôleur, des mesures d'interférence réalisées par le contrôleur et/ou par l'au moins un terminal non cellulaire, et est en outre configurée pour émettre ledit message de déchargement lorsque ladite interférence mesurée par ledit composant de mesure d'interférence (41) excède un certain seuil ; et
ledit contrôleur est en outre configuré pour relayer au moins une partie de l'information envoyée par ledit terminal utilisateur cellulaire sur ledit contrôleur sur au moins un composant parmi ladite station de base, ledit réseau cellulaire et un autre réseau non cellulaire couplé à l'Internet, ou pour relayer au moins une certaine information en provenance de ladite station de base et destinée audit terminal utilisateur cellulaire via ledit contrôleur sur ledit terminal utilisateur cellulaire.

2. Système de communication mobile (9) tel que revendiqué selon la revendication 1, dans lequel ladite station de base (1) est configurée pour émettre un message de déchargement sur ledit terminal utilisateur cellulaire (11) lorsque ladite interférence mesurée par ledit composant de mesure d'interférence (41) excède un certain seuil, ledit message de déchargement comprenant au moins un identifiant parmi un identifiant qui identifie ledit réseau non cellulaire et un identifiant qui identifie ledit contrôleur (21).

3. Système de communication mobile (9) tel que revendiqué selon l'une quelconque des revendications 1 et 2, dans lequel ladite station de base (1) est configurée pour émettre un message de déchargement sur ledit contrôleur (21) lorsque ladite interférence mesurée par ledit composant de mesure d'interférence (41) excède un certain seuil, ledit message de déchargement comprenant un identifiant qui identifie ledit terminal utilisateur cellulaire (11).

4. Système de communication mobile (9) tel que revendiqué selon l'une quelconque des revendications 1 à 3, dans lequel ladite connexion entre ledit terminal utilisateur cellulaire (11) et ledit contrôleur (21) remplace une connexion existante entre ledit terminal utilisateur cellulaire (11) et ladite station de base (1) .

5. Système de communication mobile (9) tel que revendiqué selon l'une quelconque des revendications 1 à 4, dans lequel ledit terminal utilisateur cellulaire (11) est configuré pour, après que ledit terminal utilisateur cellulaire (11) et ledit contrôleur (21) ont été connectés, instaurer une quelconque nouvelle connexion sur l'Internet via ledit contrôleur (21) jusqu'à nouvel ordre.

6. Système de communication mobile (9) tel que revendiqué selon l'une quelconque des revendications 1 à 5, dans lequel ledit contrôleur (21) est configuré pour relayer au moins une partie de l'information envoyée par ledit terminal utilisateur cellulaire (11) sur ledit contrôleur (21) sur au moins un composant parmi ladite station de base (11) et ledit réseau de communication cellulaire.

7. Système de communication mobile (9) tel que revendiqué selon l'une quelconque des revendications 1 à 6, dans lequel ledit contrôleur (21) est configuré pour relayer au moins une partie de l'information envoyée par ledit terminal utilisateur cellulaire (11) sur ledit contrôleur (21) sur un autre réseau non cellulaire couplé à l'Internet à la place de ladite station de base (1).

8. Système de communication mobile (9) tel que revendiqué selon l'une quelconque des revendications 1 à 7, dans lequel ladite station de base (1) est configurée pour relayer au moins une certaine information destinée audit terminal utilisateur cellulaire (11) via ledit contrôleur (21).

9. Station de base (1) pour une utilisation dans un système de communication mobile (9) selon l'une quelconque des revendications 1 à 8 couplée à un réseau de communication cellulaire, comprenant :
au moins un émetteur (3) pour émettre des signaux sans fil sur au moins un composant parmi un terminal utilisateur cellulaire (11) et un contrôleur (21) d'un réseau non cellulaire ; et
un processeur (5) configuré pour utiliser au moins un émetteur parmi ledit au moins un émetteur (3) pour émettre un message de déchargement sur au moins un composant parmi a) ledit terminal utilisateur cellulaire (11), dans lequel ledit message de déchargement comprend i) une demande pour que ledit terminal utilisateur cellulaire (11) soit connecté audit contrôleur (21) et ii) au moins un identifiant parmi un identifiant qui identifie ledit réseau non cellulaire et un identifiant qui identifie ledit contrôleur (21), et b) ledit contrôleur, dans lequel ledit message de déchargement comprend iii) une demande pour que ledit contrôleur (21) soit connecté audit terminal utilisateur cellulaire (11) et iv) un identifiant qui identifie ledit terminal utilisateur cellulaire (11),
**caractérisé en ce que** :
la station de base (1) est en outre configurée pour recevoir, en provenance du contrôleur, des mesures d'interférence réalisées par le contrôleur et/ou par l'au moins un terminal non cellulaire,
l'émetteur est en outre configuré pour émettre ledit message de déchargement lorsque l'interférence générée par ledit terminal utilisateur cellulaire (11) sur d'autres terminaux telle que mesurée par un composant de mesure d'interférence (41) excède un certain seuil, et
la station de base est en outre configurée pour relayer au moins une certaine information destinée audit terminal utilisateur cellulaire (11) via ledit contrôleur (21) .

10. Contrôleur (21) d'un réseau non cellulaire pour une utilisation dans un système de communication mobile (9) selon l'une quelconque des revendications 1 à 8, comprenant :
au moins un récepteur (23) pour recevoir des signaux sans fil en provenance d'une station de base (1) et en provenance d'au moins un terminal utilisateur non cellulaire (11) ;
au moins un émetteur (25) pour émettre des signaux sans fil sur au moins un terminal utilisateur non cellulaire (21) ; et
un processeur (27) configuré pour utiliser au moins un récepteur parmi ledit au moins un récepteur (23) pour recevoir un message de déchargement, ledit message de déchargement comprenant une demande pour que ledit contrôleur (21) soit connecté à au moins un terminal utilisateur cellulaire (11) et au moins un identifiant qui identifie ledit au moins un terminal utilisateur cellulaire (11), et pour utiliser au moins un émetteur parmi ledit au moins un émetteur (25) pour établir une connexion avec ledit au moins un terminal utilisateur cellulaire (11),
**caractérisé en ce que** le processeur est configuré pour envoyer des mesures d'interférence réalisées par le contrôleur et/ou par l'au moins un terminal non cellulaire sur la station de base, les mesures d'interférence mesurant la quantité d'interférence générée par ledit terminal utilisateur cellulaire sur d'autres terminaux utilisateur, et pour recevoir ledit message de déchargement lorsque l'interférence mesurée excède un certain seuil ; et
ledit contrôleur est en outre configuré pour relayer au moins une partie de l'information envoyée par ledit terminal utilisateur cellulaire sur ledit contrôleur sur au moins un composant parmi ladite station de base, ledit réseau cellulaire et un autre réseau non cellulaire couplé à l'Internet, ou pour relayer au moins une certaine information en provenance de ladite station de base et destinée audit terminal utilisateur cellulaire via ledit contrôleur sur ledit terminal utilisateur cellulaire.
